# DEMANDE DE BREVET EUROPEEN

(11) **EP 4 627 907 A1**
(43) Date de publication de la demande: **08.10.2025**
(21) Numéro de dépôt: 24168334.1
(22) Date de dépôt: 03.04.2024
(51) Int. Cl.: A01D 45/00, A01D 46/30

(54) **OUTIL DE RÉCOLTE POUR UN SYSTÈME DE RÉCOLTE DE LÉGUMES DE CULTURE CULTIVÉS DANS UNE BUTTE DE CULTURE ET PROCÉDÉ DE RÉCOLTE**

(71) Demandeur: Sylektis, 91310 Leuville-Sur-Orge (FR)
(72) Inventeur: GARRIGUE, Wilfried, 91310 LEUVILLE-SUR-ORGE (FR); ABRAHAM, Stéphane, 44100 NANTES (FR)
(74) Mandataire: AtlantIP International

(57) **Abrégé**

L'invention concerne un outil de récolte (1) d'un légume cultivé dans une butte de culture, l'outil de récolte (1) comportant :
- un bras (11) comportant, à une extrémité libre inférieure, une embase (12) formant un cerclage périphérique à une ouverture de récolte (122) destinée à accueillir le légume à récolter ;
- une pluralité de lames de récolte (13) configurées pour s'étendre en travers de l'ouverture de récolte (122), au moins une des lames de récolte (13) - dit lame tranchante (13A) - comportant un bord de coupe destiné à permettre de trancher le légume de culture ;
- un dispositif d'articulation des lames de récolte (13) configuré pour déplier les lames de récolte (13) dans n'importe quelle configuration comprise entre une configuration déployée dans laquelle les lames de récolte (13) s'étendent en travers de l'ouverture de récolte (122) et une configuration repliée dans laquelle les lames de récolte (13) sont hors de l'ouverture de récolte (122).

## Description

Le contexte technique de la présente invention est celui des machines agricoles. Plus particulièrement, l'invention se rapporte à la détection et à la récolte d'un légume cultivé dans une butte de culture. Elle trouve une application privilégiée, mais non exclusive, à la détection et à la récolte d'asperges cultivées dans des buttes de culture, et c'est dans le cadre de cette application privilégiée qu'elle sera plus particulièrement décrite dans le présent document.

Les pousses d'asperges poussent vers le haut dans le barrage et la récolte commence dès que les turions de celles-ci émergent hors de la butte de culture de quelques millimètres à quelques centimètres seulement.

Cette récolte nécessite donc, d'une part, de détecter de manière précise et performante l'émergence de la tête des asperges du sol et, d'autre part, de disposer d'outils capables d'aller chercher le turion sous terre sans le blesser ou le briser, et tout en maintenant au maximum l'intégrité de la butte de culture. C'est une récolte manuelle effectuée majoritairement par du personnel saisonnier. Dans un contexte de raréfaction de la main d'oeuvre disponible, la récolte manuelle devient problématique, d'autant plus quand la période de récolte est courte.

L'état de la technique connaît diverses approches pour automatiser ce processus à forte intensité de main d'oeuvre. En particulier, pour des exploitations de grande taille, on connaît des véhicules agricoles qui mettent en oeuvre des systèmes de détection des asperges prêtes à être récoltées par des moyens optiques ou par détection d'une différence de potentiel électrique entre la butte de culture et l'asperge détectée.

En outre, On connait notamment le document DE102016112905 qui décrit un véhicule agricole permettant de récolter des asperges tout en roulant. Un tel véhicule agricole comprend un châssis et au moins un système de récolte comportant un outil de piquage conçu pour percer la butte de culture afin de récolter l'asperge. Le système de récolte est monté pivotant sur une tige pendulaire afin de pouvoir incliner le système de récolte dans le sens d'avancement du véhicule agricole. Le système de récolte comporte aussi un outil de coupe permettant de couper une pousse d'asperge dans la butte de culture et un dispositif d'extraction permettant de récolter ladite asperge et de la sortir hors de la butte de culture.

Ces véhicules agricoles sont extrêmement coûteux et présentent une grande complexité technique, rendant leurs prix excessifs et inadaptés aux exploitations de petite et moyenne taille c'est-à-dire inférieures à 20 Hectares.

La présente invention a pour objet de proposer un nouvel outil de récolte afin de répondre au moins en grande partie aux problèmes précédents et de conduire en outre à d'autres avantages.

Un autre but de l'invention est de simplifier la récolte des légumes cultivés dans des buttes de culture.

Un autre but de l'invention est de proposer une solution économique et facilement déployable dans des installations agricoles de moindre envergure.

Selon un premier aspect de l'invention, on atteint au moins l'un des objectifs précités avec un outil de récolte pour un système de récolte de légumes de culture cultivés dans une butte de culture, l'outil de récolte comportant :
- une portée cylindrique formant un bras comportant, à une extrémité libre inférieure dudit bras, une embase formant un cerclage périphérique à une ouverture de récolte ;
- une pluralité de lames de récolte configurées pour s'étendre en travers de l'ouverture de récolte, au moins une des lames - dite lame tranchante - comportant une lame de coupe destinée à permettre de trancher un des légumes de culture ;
- un dispositif d'articulation des lames de récolte configuré pour déplier les lames de récolte dans n'importe quelle configuration comprise entre une configuration déployée dans laquelle les lames de récolte s'étendent en travers de l'ouverture de récolte et une configuration repliée dans laquelle les lames de récolte sont hors de l'ouverture de récolte.

Dans le contexte de la présente invention, l'outil de récolte permet à la fois de trancher un légume présent dans la butte de culture - tel que par exemple une asperge - afin de le séparer d'une partie inférieure, voire de ses racines, mais aussi de le prélever en l'extrayant hors de la butte de culture.

Dans le contexte de la présente invention, la portée cylindrique forme un bras d'extension rectiligne. Le bras est destiné à être enfoncé dans la butte de culture afin de couper en profondeur dans la butte de culture le légume à récolter. D'une manière générale, le bras est configuré pour s'étendre de manière verticale ou sensiblement verticale. Eventuellement, le bras de l'outil de récolte peut être incliné vers l'avant ou vers l'arrière, relativement à un axe d'avancement de l'outil de récolte. Complémentairement, le bras peut être monté pivotant, de sorte à pouvoir réaliser un mouvement de balancier au niveau de son extrémité inférieure, ou le bras est monté mobile en translation selon son propre axe d'extension, c'est-à-dire préférentiellement de manière verticale ou sensiblement verticale.

Dans le contexte de la présente invention, l'embase du bras comporte une protrusion qui s'étend au niveau d'une extrémité inférieure de l'outil de récolte. Selon une première variante de réalisation, l'embase est fixée solidairement au bras - et notamment à sa portée cylindrique - par n'importe quel moyen, tel que par exemple par vissage ou par soudage. Alternativement, selon une deuxième variante de réalisation, l'embase est issue de matière avec le bras - et notamment avec sa portée cylindrique - de sorte que l'embase et le bras ne peuvent être détachés l'un de l'autre sans que l'un et/ou l'autre ne soit entièrement ou partiellement détérioré ou détruit. D'une manière générale, l'embase présente une section transverse, c'est-à-dire une épaisseur ou un profil pris dans un plan perpendiculaire au bras, qui est suffisamment faible pour faciliter l'enfoncement de l'outil de récolte, et en particulier de son bras et de l'embase. A cet effet, l'embase délimite radialement l'ouverture de récolte, l'embase formant ainsi un cerclage périphérique à ladite ouverture de récolte. Dans le contexte de l'invention, le légume à récolter est inséré au travers de l'ouverture de récolte lors d'un mouvement d'enfoncement de l'outil de récolte - et en particulier du bras, de l'embase et des lames de récolte.

Dans le contexte de la présente invention, les lames de récolte forment un outil de coupe configuré pour permettre un sectionnement du légume à récolter dans la butte de culture. Comme évoqué précédemment, le sectionnement du légume à récolter par rapport à une partie inférieure dudit légume est réalisé dans la butte de culture, successivement à un enfoncement du bras dans ladite butte de culture. Les lames de récolte s'étendent à partir de l'extrémité inférieure du bras et au niveau de l'embase. En particulier, les lames de récolte sont associées à l'embase, de sorte à collaborer avec l'embase pour trancher le légume à récolter d'une part, et pour permettre son extraction hors de la butte de culture d'autre part. Les lames de récolte sont configurées pour s'étendre en travers de l'embase. Au moins une partie des lames de récolte forment un ou plusieurs doigts tranchants. Selon une première variante, les lames de récolte comportent une unique lame tranchante. Alternativement, selon une deuxième variante de réalisation, les lames de récolte comportent plusieurs lames tranchantes, voire tous les lames de récolte sont des lames tranchantes.

Dans le contexte de la présente invention, le ou les lames tranchantes sont des lames de récolte associées à un bord tranchant permettant le sectionnement du légume à récolter. Le bord tranchant forme un bord biseauté et tranchant pour la lame tranchante. Ainsi, la lame tranchante forme une sorte de faucille.

Dans le contexte de la présente invention, les lames de récolte sont mobiles par rapport à l'embase afin de pouvoir s'étendre en travers de l'ouverture de récolte ou de pouvoir laisser libre ladite ouverture de récolte. Cette mobilité est autorisée par le dispositif

L'outil de récolte conforme au premier aspect de l'invention comprend avantageusement au moins un des perfectionnements ci-dessous, les caractéristiques techniques formant ces perfectionnements pouvant être prises seules ou en combinaison :
- chaque lame de récolte s'étend préférentiellement de manière courbe. En d'autres termes, chaque lame de récolte est définie par un profil directeur prenant une forme courbe, c'est-à-dire par exemple circulaire ou elliptique. Cette configuration avantageuse permet d'améliorer la coupe du légume à récolter lors de l'articulation des lames de récolte. D'une manière générale, chaque lame de récolte s'étend dans un plan perpendiculaire au bras. Préférentiellement, chaque lame de récolte s'étend dans un plan parallèle au déplacement desdites lames de récolte lorsqu'elles sont articulées par le dispositif d'articulation ;
- le bord de coupe de l'au moins une lame tranchante est situé sur un bord concave du profil directeur. Le bord de coupe de chaque lame tranchante est un bord aiguisé afin de sectionner efficacement le légume à récolter dans la butte de culture et lors du mouvement de ladite au moins une lame tranchante articulée par le dispositif d'articulation ;
- le dispositif d'articulation est du type d'une articulation pivot, chaque lame de récolte étant configurée pour pivoter entre la configuration déployée et la configuration repliée. En d'autres termes, chaque lame de récolte est configurée pour pivoter autour d'un axe de rotation - préférentiellement parallèle à la portée cylindrique de l'outil de récolte - afin de pivoter entre la configuration déployée et la configuration repliée. En d'autres termes, la configuration déployée correspond à une ou plusieurs premières configurations angulaires des lames de récolte, et la configuration repliée correspond à une ou plusieurs deuxièmes configurations angulaires des lames de récolte, la ou les deuxièmes configurations angulaires étant différentes de la ou des premières configurations angulaires. le dispositif d'articulation permet ainsi de mettre en mouvement les lames de récolte et la ou les lames tranchantes afin de pouvoir, lors dudit mouvement, trancher le légume à récolter et permettre son extraction hors de la butte de la culture ;
- chaque lame de récolte est liée à un axe de rotation associé à la portée cylindrique formant le bras, l'axe de rotation étant entrainé en rotation de sorte à actionner de manière contrôlée un pivotement des lames de récolte en travers de l'ouverture de récolte. L'axe de rotation s'étend dans la portée cylindrique. Selon une première variante de réalisation préférée de l'invention, chaque lame de récolte comporte un talon couplé en rotation à l'axe de rotation. Dans cette variante de réalisation, la lame de récolte et son talon sont entrainés en rotation par l'axe de rotation, qui est lui-même entrainé en rotation par un organe de commande. En d'autres termes, il existe un mouvement de rotation relative entre le talon de chaque lame de récolte et l'axe de rotation. A titre d'exemple non limitatif, le talon comporte au moins une denture engrenée avec une denture complémentaire formée sur l'axe de rotation. Dans cette variante de réalisation, les lames de récolte peuvent être toutes emmenées dans un même mouvement de rotation, identique à toutes les lames de récolte ; ou les lames de récoltes possèdent chacune un mouvement de rotation propre et différent - dans son amplitude - par rapport aux autres lames de récolte. En d'autres termes, les lames de récolte sont mobiles en rotation les unes par rapport aux autres. En d'autres termes encore, chaque lame de récolte est articulée en rotation par l'axe de rotation de manière indépendante aux autres lames de récolte.
- selon une deuxième variante de réalisation, chaque lame de récolte comporte un talon solidaire de l'axe de rotation. Dans cette variante de réalisation, la lame de récolte et son talon sont fixés solidairement à l'axe de rotation, qui, par sa mise en rotation par un organe de commande, conduit à la rotation des lames de récolte. En particulier, le talon forme une bague engagée sur l'axe de rotation, de sorte à être entrainé en rotation avec ledit axe de rotation. Dans cette variante de réalisation, la bague formant le talon est sertie ou emmanchée sur l'axe de rotation. L'axe de rotation comporte avantageusement des moyens de retenue de la bague afin de définir un arrêt en translation le long dudit axe de rotation.
- dans l'une ou l'autre des variantes de réalisation, les lames de récolte et le dispositif d'articulation sont configurés pour permettre, dans la configuration déployée, un déploiement des lames de récolte au travers de l'ouverture de récolte, de sorte que les lames de récolte soient réparties et distantes les une des autres. Dans le contexte de la présente invention, le déploiement des lames de récolte implique un étalement des lames de récolte au travers de l'ouverture de récolte, de sorte qu'il existe un espacement non nul - éventuellement nul - entre deux lames de récoltes adjacentes. Cette configuration avantageuse permet de former une surface d'appui pour le légume à récolté venant d'être tranché par la lame tranchante, de sorte à permettre son extraction hors de la butte de culture. En d'autres termes, le déploiement des lames de récolte en travers de l'ouverture de récolte permet de faire reposer l'extrémité coupée du légume de récolte sur les lames de récolte déployées et d'éviter qu'il ne passe au travers de l'ouverture de récolte lors de la remontée de l'outil de récolte hors de la butte de culture ;
- chaque lame de récolte comporte, à proximité de son talon, un ergot configuré pour collaborer avec la portée cylindrique et/ou avec le talon de sorte à former un arrêt en rotation autour de l'axe de rotation. Cette configuration avantageuse permet de définir une position angulaire spécifique pour chacune des lames de récolte, lors de leur déploiement dans la configuration déployée. En effet, l'interaction entre l'ergot et l'axe de rotation - voire la portée cylindrique formant le bras de l'outil de récolte - et/ou avec le talon associé au bras, permet d'arrêter en rotation la lame de récolte correspondante, à une configuration angulaire spécifique. Cette configuration avantageuse permet ainsi de facilement déployer les lames de récolte en travers de l'ouverture de récolte et de définir efficacement les positions angulaires de chaque lame de récolte en travers de l'ouverture de récolte. une surface d'appui pour le légume à récolter venant d'être coupé
- en particulier, la portée cylindrique comporte au moins une butée d'arrêt configurée pour collaborer avec l'ergot de chaque lame de récolte lors de leur rotation. Ainsi, les ergots de chaque lames de récolte sont configurés d'une manière telle que, en configuration déployée, chaque lame de récolte définit une position angulaire différente par rapport aux autres lames de récolte. Alternativement ou complémentairement, chaque ergot s'étend en saillie depuis la lame de récolte correspondante et en direction du talon, relativement à une direction parallèle ou sensiblement parallèle à l'axe de rotation ;
- les lames de récolte sont configurées de manière étagée relativement à l'axe de rotation. En d'autres termes, les lames de récolte sont superposées les unes aux autres, éventuellement avec un jeu axial non nul entre elles, relativement à une direction parallèle ou sensiblement parallèle à l'axe de rotation. Cette configuration avantageuse permet de faciliter le mouvement de chaque lame de récolte indépendamment des autres, et de faciliter le repliement ou le déploiement de chacune d'entre elles ;
- dans la configuration repliée, le dispositif d'articulation est configuré pour disposer les lames de récolte de manière superposée les unes aux autres. En d'autres termes, dans la configuration repliée, toutes les lames de récolte sont configurées dans une même configuration angulaire. En particulier, dans la configuration repliée, les lames de récolte sont toutes logées au niveau de l'embase du bras. A cet effet, l'embase comporte avantageusement une lumière périphérique configurée pour accueillir les lames de récolte dans leur configuration repliée. La lumière périphérique forme un lamage ou une ouverture traversante aménagée dans l'embase elle-même, et permettant aux lames de récolte de pouvoir y être insérées ou de pouvoir passer au travers.

Selon un deuxième aspect de l'invention, il est proposé un système de récolte de légumes cultivés dans une butte de culture, le système de récolte comportant :
- un outil de récolte conforme au premier aspect de l'invention ou selon l'un quelconque de ses perfectionnements ;
- un système d'enfoncement de l'outil de récolte, le système d'enfoncement étant configuré pour enfoncer l'outil de récolte dans la bute de culture, relativement à un axe vertical pris parallèlement ou sensiblement parallèlement à l'axe du bras de l'outil de récolte.

Avantageusement, le système de récolte comporte :
- un dispositif de translation de l'outil de récolte avec un légume à récolter dans la butte de culture ;
- un dispositif de détection des légumes à récolter dans la butte de culture ;
- une unité de contrôle configurée pour piloter le dispositif de translation de sorte à ce que le légume à récolté détecté par le dispositif de détection soit centré avec l'ouverture de récolte de l'outil de récolte.

Le dispositif de détection comporte préférentiellement un capteur optique, tel que par exemple une caméra. En particulier, le dispositif de détection est configuré pour mettre en oeuvre une reconnaissance optique des légumes à récolter dans la butte de culture. A titre d'exemple non limitatif, la reconnaissance optique est mise en oeuvre par un réseau de neurones ayant été entrainé à distinguer des légumes suffisamment mature pour pouvoir être récoltés.

Selon un troisième aspect de l'invention, il est proposé un procédé de récolte d'un légume cultivé dans une butte de culture, le procédé de récolte étant mis en oeuvre par le système de récolte conforme au deuxième aspect de l'invention et comportant les étapes suivantes :
- une étape de détection d'un légume prêt à être récolté ;
- une étape de pilotage du dispositif de translation du système de récolte afin d'aligner le légume prêt à être récolté avec l'outil de récolte, et notamment de sorte à ce que ledit légume prêt à être récolté soit situé dans l'ouverture de récolte de l'embase du bras de l'outil ;
- une étape de contrôle du système d'enfoncement de sorte à enfoncer l'outil de récolte dans la butte de culture, les lames de récolte de l'outil de récolte étant toutes configurées dans leur configuration repliée afin de permettre au légume prêt à être récolté de s'insérer au travers de l'ouverture de récolte durant la descente de l'outil de récolte ;
- une étape de sectionnement du légume prêt à être récolté, le dispositif d'articulation étant piloté de sorte à ce que les lames de récolte soient configurées dans leur configuration déployée ;
- une étape de remontée du légume prêt à être récolté, le système d'enfoncement étant configuré pour remonter l'outil de récolte, le légume prêt à être remonté étant maintenu et emporté vers le haut par les lames de récolte déployées au travers de l'embase.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue en perspective d'un exemple de réalisation d'un outil de récolte conforme au premier aspect de l'invention et dans une configuration repliée des lames de récolte ;
[Fig.2] illustre une vue en perspective de l'outil de récolte illustré sur la FIGURE 1 et dans une configuration déployée des lames de récolte ;
[Fig.3] illustre une vue de détail des lames de récolte de l'outil de récolte illustré sur les FIGURES 1 et 2 ;
[Fig.4] illustre un diagramme synoptique du procédé de récolte à l'aide de l'outil de récolte illustré sur les FIGURES 1 à 3.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

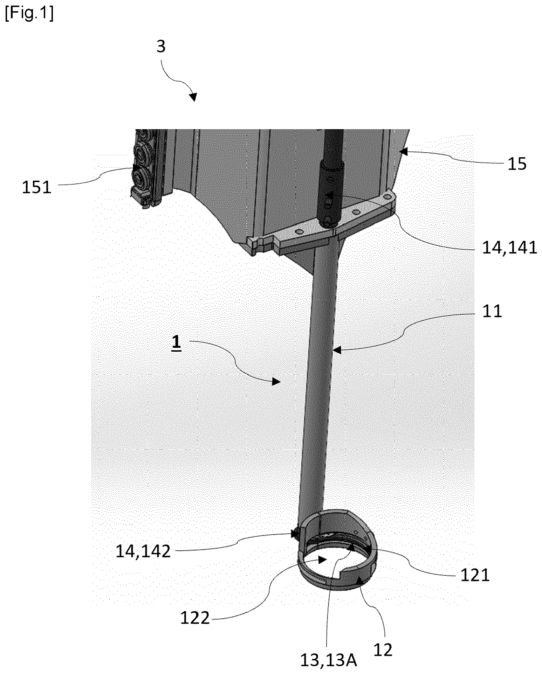

En référence aux FIGURES 1 à 3, l'invention adresse un système de récolte 3 de légumes cultivés dans une butte de culture, le système de récolte 3 comportant
- un outil de récolte 1 ;
- un système d'enfoncement 151 de l'outil de récolte 1, le système d'enfoncement 151 étant configuré pour enfoncer l'outil de récolte 1 dans la bute de culture, relativement à un axe vertical pris parallèlement ou sensiblement parallèlement à l'axe du bras 11 de l'outil de récolte 1.

Complémentairement, le système de récolte 3 peut comporter un dispositif de translation de l'outil de récolte 1 avec un légume à récolter dans la butte de culture, le dispositif de translation de l'outil de récolte 1 étant configuré pour déplacer l'outil de récolte 1 transversalement à la butte de culture, de sorte à pouvoir aligner l'outil de récolte 1 avec l'un des légumes à récolter dans la butte de culture. A cet effet, le dispositif de translation comporte par exemple au moins un rail de guidage destiné à être orienté transversalement à la butte de culture, et un actionneur 141, tel que par exemple un moteur électrique, un vérin, configuré pour déplacer l'outil de récolte 1 le long de l'au moins un rail de guidage, ledit outil de récolte 1 étant supporté par un support 15 solidaire d'un chariot mobile le long dudit rail de guidage.

Eventuellement, afin de faciliter l'alignement de l'outil de récolte 1 avec le légume à récolter, le système de récolte 3 comporte aussi un dispositif de détection des légumes à récolter dans la butte de culture. Le dispositif de détection comporte préférentiellement un capteur optique, tel que par exemple une caméra. En particulier, le dispositif de détection est configuré pour mettre en oeuvre une reconnaissance optique des légumes à récolter dans la butte de culture. A titre d'exemple non limitatif, la reconnaissance optique est mise en oeuvre par un réseau de neurones ayant été entrainé à distinguer des légumes suffisamment mature pour pouvoir être récoltés.

Enfin, de manière avantageuse, le système de récolte 3 comporte une unité de contrôle configurée pour piloter le dispositif de translation de sorte à ce que le légume à récolté détecté par le dispositif de détection soit centré avec l'ouverture de récolte 122 de l'outil de récolte 1. Dans le contexte de la présente invention, l'unité de contrôle comporte au moins un microcontrôleur et/ou au moins un circuit imprimé et/ou au moins un microprocesseur. Complémentairement, l'unité de contrôle comporte aussi éventuellement au moins une mémoire.

Pour permettre de contrôler le système de récolte 3 et son déplacement le long de la butte de culture, il peut être intéressant que le système de récolte 3 comporte un dispositif de géolocalisation, tel que par exemple une balise GPS, et/ou un dispositif de télécommunication, tel que par exemple une puce 3G, 4G, 5G afin de permettre un repérage par triangulation du système de récolte 3 ainsi que son éventuel pilotage à distance.

Enfin, le système de récolte 3 comporte avantageusement une batterie électrique permettant de stocker une énergie électrique utile au fonctionnement du système de récolte 3. La batterie électrique est par exemple du type d'une batterie lithium-ion. La batterie électrique est reliée électriquement au système de récolte 3 et à l'outil de récolte 1 afin de garantir leur bon fonctionnement.

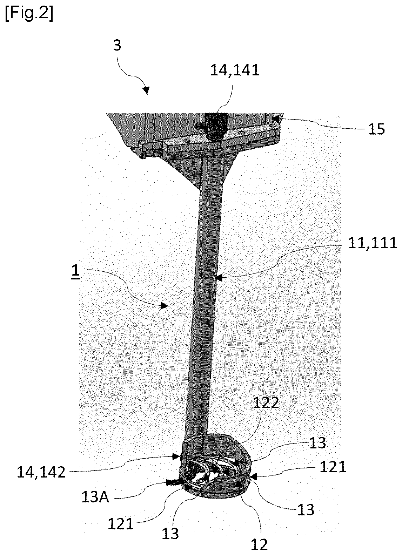

Selon l'invention, et comme visible sur les FIGURES 1 et 2 notamment, l'outil de récolte 1 comporte :
- une portée cylindrique 111 formant un bras 11 s'étendant depuis le support 15 et comportant, à une extrémité libre inférieure dudit bras 11, une embase 12 formant un cerclage périphérique à une ouverture de récolte 122. L'embase 12 s'étend en saillie depuis le bras 11, au niveau de son extrémité inférieure, de sorte à ce que le bras 11 - et plus particulièrement sa portée cylindrique 111, s'étende à l'aplomb de l'embase 12, laissant l'ouverture de récolte 122 complètement libre
- une pluralité de lames de récolte 13 configurées pour s'étendre en travers de l'ouverture de récolte 122, au moins une des lames - dite lame tranchante 13A - comportant une lame de coupe 131 destinée à permettre de trancher un des légumes de culture. Chaque lame de récolte 13 prend la forme d'une mini faucille, c'est-à-dire une forme incurvée, voire courbe, c'est-à-dire elliptique ou circulaire, et s'étendant au niveau de l'extrémité inférieure du bras 11, au niveau de l'embase 12 et de son ouverture de récolte 122 ;
- un dispositif d'articulation des lames de récolte 13 configuré pour déplier les lames de récolte 13 dans n'importe quelle configuration comprise entre une configuration déployée dans laquelle les lames de récolte 13 s'étendent en travers de l'ouverture de récolte 122 et une configuration repliée dans laquelle les lames de récolte 13 sont hors de l'ouverture de récolte 122.

L'outil de récolte 1 et le système de récolte 3 selon l'invention sont particulièrement intéressants pour permettre la récolte efficace d'un légume cultivé dans la butte de culture.

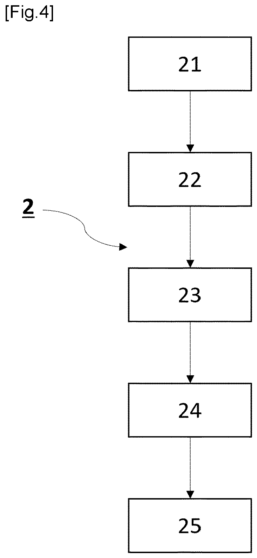

Ainsi, en référence à la FIGURE 4, la récolte d'un légume dans la butte de culture par l'outil de récolte 1 s'effectue désormais selon les étapes suivantes :
- une étape de détection 21 d'un légume prêt à être récolté. La détection du légume peut être réalisée par tout moyen, et notamment par un capteur mécanique, du type d'un palpeur détectant la présence d'un légume en surface de la butte de culture, ou encore par un capteur électrique mesurant localement la conductivité électrique dans la butte de culture, ou encore, préférentiellement, par un capteur optique configuré pour distinguer la présence d'un légume à récolter sur la butte de culture ;
- une étape de pilotage 22 du dispositif de translation du système de récolte 3 afin d'aligner le légume prêt à être récolté avec l'outil de récolte 1, et notamment de sorte à ce que ledit légume prêt à être récolté soit situé dans l'ouverture de récolte 122 de l'embase 12 du bras 11 de l'outil. En particulier l'étape de pilotage 22 consiste en l'actionnement du dispositif de translation afin de positionner l'outil de récolte 1 à l'aplomb du légume à récolter. Plus particulièrement, l'étape de pilotage 22 vise à placer le légume à récolter à l'aplomb de l'embase 12, de sorte à ce que ledit légume à récolter soit situé au niveau de l'ouverture de récolte 122 ;
- une étape de contrôle 23 du système d'enfoncement 151 de sorte à enfoncer l'outil de récolte 1 dans la butte de culture, les lames de récolte 13 de l'outil de récolte 1 étant toutes configurées dans leur configuration repliée afin de permettre au légume prêt à être récolté de s'insérer au travers de l'ouverture de récolte 122 durant la descente de l'outil de récolte 1. A titre d'exemple illustratif, la FIGURE 1 illustre un tel outil de récolte 1 dans lequel les lames de récolte 13s sont configurées dans leur configuration repliée. Au cours de cette étape, l'embase 12 s'enfonce dans la butte de récolte autour du légume à récolter, celui-ci s'étendant alors dans l'ouverture de récolte 122. Les lames de récolte 13s sont repliées afin de permettre cette progression ;
- une fois que la profondeur de coupe a été atteinte, le procédé de récolte 2 comporte une étape de sectionnement 24 du légume prêt à être récolté, le dispositif d'articulation étant piloté de sorte à ce que les lames de récolte 13 soient configurées dans leur configuration déployée. A titre d'exemple illustratif, la FIGURE 2 illustre un tel outil de récolte 1 dans lequel les lames de récolte 13s sont configurées dans leur configuration repliée. Au cours de cette étape, le mouvement des lames de récolte 13, et notamment de la ou des lames tranchantes 13A, permet de sectionner le légume à récolter, tout en le maintenant dans l'ouverture de récolte 122. Cette étape permet ainsi de séparer la partie supérieure du légume à récolter qui sera extraite hors de la butte de culture, de ses racines. Le légume à récolter est alors, pour l'instant, maintenu dans la butte de culture et au niveau de l'ouverture de récolte 122.
- une étape de remontée 25 du légume prêt à être récolté, le système d'enfoncement 151 étant configuré pour remonter l'outil de récolte 1, le légume prêt à être remonté étant maintenu et emporté vers le haut par les lames de récolte 13 déployées au travers de l'embase 12. Les lames de récolte 13 forment ainsi une plateforme soutenant le légume à récolter venant d'être coupé. Ce dernier est alors extrait hors de la bute de culture, au cours d'un mouvement de translation vers le haut, ledit légume étant alors maintenu sur les lames de récolte 13 formant la plateforme. Le cerclage périphérique par l'embase 12 de l'outil de récolte 1 permet d'éviter que la base du légume ne glisse hors de cette plateforme formée par les lames de récolte 13. En sortant hors de la butte de culture, par le haut, le légume est alors pris en charge, par son extrémité supérieure par un organe de maintien comportant par exemple un anneau ou un tube de récolte solidaire du support 15 du système de récolte 3, de sorte à éviter que le légume ainsi récolté ne retombe sur la butte de culture. D'une manière générale, l'organe de maintient est situé à l'aplomb de l'outil de récolte 1, préférentiellement de manière coaxiale ou centrée avec l'ouverture de récolte 122 de l'outil de récolte 1.

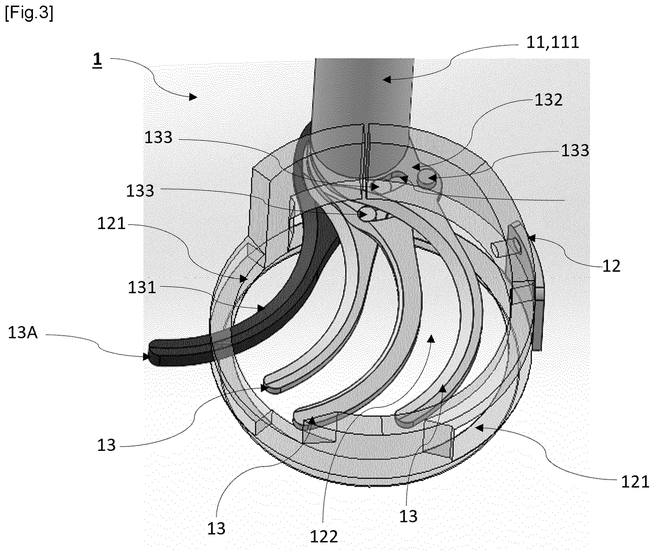

En référence à la FIGURE 3, l'extrémité inférieure de l'outil de récolte 1 va maintenant être décrit plus en détail l'extrémité inférieure du bras 11 de l'outil de récolte 1 support 15 l'embase 12. L'embase 12 s'étend en saillie depuis le bras 11, dans un plan sensiblement perpendiculaire à la portée cylindrique 111 formant le bras 11. L'embase 12 décrit ainsi un contour fermé, par exemple circulaire dans l'exemple de réalisation illustré sur les FIGURES, de sorte à délimiter l'ouverture de récolte 122.

L'embase 12 prend la forme d'une portée relativement étroite afin de faciliter sa pénétration dans la butte de culture. En effet, en présentant une faible portance vis-à-vis de la butte de culture, les efforts exercés sur l'outil de récolte 1 et son embase 12 sont moins importants, facilitant ainsi son enfoncement. A titre d'information, l'embase 12 est avantageusement formée d'un matériau métallique, par exemple comportant de l'acier, ou comportant un matériau synthétique tel que par exemple une résine ou une céramique afin de limiter l'effet de la rouille par exemple.

La portée de l'embase 12 présente une première partie proximale de la portée cylindrique 111 du bras 11, et une deuxième partie distale du bras 11. La première partie présente une élévation supérieure à celle de la deuxième partie, relativement à un axe parallèle à la portée cylindrique 111 du bras 11 de l'outil de récolte 1. Cette configuration avantageuse permet, d'une part, de renforcer la liaison de l'embase 12 avec la portée cylindrique 111 et, d'autre part, de renforcer la rigidité de l'embase 12 elle-même, notamment lors de son enfoncement dans la butte de culture ou lors de la remontée du légume coupé. En effet, durant ces phases, l'embase 12 est soumise à des efforts de flexion vis-à-vis du bras 11 de l'outil de récolte 1. Un renforcement mécanique de la portée de l'embase 12, par un épaississement de matière ou une élévation augmentée permet ainsi de garantir une meilleure tenue sans augmenter les efforts de déplacement dans la butte de culture.

La portée formant l'embase 12 comporte en outre au moins une ouverture radiale formant une lumière périphérique 121 et permettant de loger ou de laisser passer au moins une partie des lames de récolte 13, partiellement ou totalement. En d'autres termes, la lumière périphérique 121, aménagée directement dans la portée formant l'embase 12, permet de faire passer au travers les lames de récolte 13. Dans l'exemple de réalisation visible sur la FIGURE 3, l'embase 12 comporte une première lumière périphérique 121 situe à droite sur la FIGURE 3, et une deuxième lumière périphérique 121 située à gauche sur la FIGURE 3. La première lumière périphérique 121 permet de loger les lames de récolte 13 dans leur configuration repliée, visible sur la FIGURE 1. En revanche, la deuxième lumière périphérique 121 permet à la lame tranchante 13A de s'étendre au travers elle lorsque les lames de récolte 13 sont configurées dans leur configuration déployée. La première lumière périphérique 121 et la deuxième lumière périphérique 121 sont globalement situées diamétralement à l'opposée l'une de l'autre vis-à-vis de l'ouverture de récolte 122, chaque lumière périphérique 121 étant configurée pour loger au moins une partie des lames de récolte 13 dans l'une ou l'autre des configurations déployée ou repliée.

Comme évoqué précédemment, l'embase 12 délimite l'ouverture de récolte 122 au travers de laquelle les lames de récolte 13s sont mises en mouvement par le dispositif d'articulation pour passer de la configuration déployée à la configuration repliée, et inversement.

Les lames de récolte 13 présentent toute une même géométrie et des dimensions analogues. En particulier, les lames de récolte 13 présente une forme incurvée, telle que par exemple en faucille. Cette configuration avantageuse permet de trancher plus efficacement le légume à récolter, en combinaison avec un mouvement de rotation desdits lames de récolte 13, induit par le dispositif d'articulation.

Les lames de récole présentent une élévation plutôt plate, relativement à l'axe d'élongation du bras 11 de l'outil de récolte 1. En particulier, les lames de récolte 13 sont prennent plutôt la forme de plaques ou de lames de faible épaisseur afin de limiter l'encombrement de l'outil de récolte 1 et de réduire aussi les dimensions de chaque lumière périphérique 121.

Au moins une partie des lames de récolte 13 présentent un bord tranchant permettant de sectionner le légume à récolter dans la butte de culture. Eventuellement, toutes les lames de récolte 13 présentent un tel bord tranchant. Eventuellement encore, une seule lame de récolte 13 présente un tel bord tranchant. La ou les lames de récolte 13 présentant un tel bord tranchant sont appelées lames tranchantes 13A. Ainsi, lors du mouvement des lames de récolte 13 entre la configuration repliée et la configuration déployée, la ou les lames tranchantes 13A coupent le légume à récolter et détachent la partie supérieure dudit légume de ses racines, permettant ensuite son extraction hors de la butte de culture. Le bord tranchant de chaque au moins une lame tranchante 13A comporte un bord biseauté et affûté pour améliorer la coupe du légume. Bien évidemment, la lame tranchante 13A est située du côté du mouvement des lames de récolte 13 lorsqu'elles passent de leur configuration repliée à leur configuration déployée. Dans le cas où les lames de récolte 13 ont une forme de faucille, alors le bord tranchant est situé du côté concave de la lame tranchante 13A.

Comme évoqué précédemment, les lames de récolte 13 sont mises en mouvement par l'intermédiaire d'un dispositif d'articulation, qui est lui-même piloté par un actionneur 141. L'actionneur 141 permet de contrôler le mouvement des lames de récolte 13, induit par le dispositif d'actionnement. D'une manière générale, le dispositif d'actionnement est lié au bras 11 de l'outil de récolte 1, et c'est son actionneur 141 qui, situé à une extrémité supérieure du bras 11, provoque la mise en rotation du dispositif d'articulation et des lames de récolte 13 par l'intermédiaire d'un organe de liaison 142. L'effort produit par l'actionneur 141 est transmis au dispositif d'articulation qui produit la rotation des lames de récolte 13 tout en garantissant la génération d'un couple suffisant pour trancher le légume à récolter.

Le dispositif d'articulation peut prendre n'importe quelle forme, selon les implantations prévues dans l'outil de récolte 1. Dans l'exemple de réalisation illustré sur les FIGURES 1 à 3, le dispositif d'articulation est tel qu'il permet le déploiement des lames de récolte 13 selon un principe d'éventail, chaque lame de récolte 13 entrainant la suivante par le biais d'un ergot.

Toutes les lames de récolte 13 sont liées - directement ou indirectement - au dispositif d'articulation afin de pouvoir être mise en rotation. A cet effet, les lames de récolte 13 comportent, à proximité du bras 11, un talon 132 leur permettant de s'accoupler au dispositif d'articulation. Le talon 132 de chaque lame de récolte 13 forme ainsi une surface plus large de la lame de récolte 13, afin de la renforcer et de permettre l'accouplement avec le dispositif d'articulation. Cet accouplement peut être réalisé par exemple par l'intermédiaire d'un mécanisme d'engrenage.

Le mouvement induit par le dispositif d'articulation de toutes les lames de récolte 13 est synchrone, dans la mesure où toutes les lames de récolte 13s sont pivotées en même temps. Cette configuration avantageuse permet de simplifier la conception de l'outil de récolte 1. En revanche, afin de pouvoir autoriser un bon recouvrement de l'ouverture de récolte 122 par les lames de récolte 13 dans leur configuration déployée, il convient de prévoir des configurations angulaires différentes pour chaque lame de récolte 13. En d'autres termes, les lames de récolte 13, lorsqu'elles sont dans leur configuration déployée, s'étendent en travers de l'ouverture de récolte 122 à différentes positions afin de former une surface d'appui discontinue pour le légume à récolter venant d'être coupé.

Comme visible sur la FIGURE 3, chaque lame de récolte 13 s'étend depuis le bras 11 de l'outil de récolte 1 et de manière courbe au travers de l'ouverture de récolte 122. Au niveau de leur talon 132, les lames de récolte 13 comportent un ergot 133 qui s'étend en saillie selon l'axe d'élongation du bras 11. Chaque ergot 133 forme une butée d'arrêt angulaire définissant une configuration angulaire prédéterminée pour la lame de récolte 13 associée. Ainsi, chaque ergot 133 est configuré pour collaborer avec la lame de récolte 13 suivante et/ou avec l'embase 12 et/ou avec le bras 11 de l'outil de récolte 1 lorsque ceux-ci se déploient depuis leur configuration repliée vers leur configuration déployée.

Comme visible sur la FIGURE 3, les lames de récolte 13 comportent une ouverture oblongue au travers de laquelle s'étend l'ergot 133 de la lame suivante de récolte. La forme et la dimension des ouvertures oblongues sont telles qu'elles permettent de réaliser un arrêt en rotation pour la lame de récolte 13 considérée. A cet effet, les lames de récolte 13s sont avantageusement assemblées sur le bras 11 de manière étagée. En d'autres termes, les lames de récolte 13s sont superposées les unes aux autres, relativement à un axe parallèle au bras 11 de l'outil de récolte 1. Cette configuration avantageuse permet à la fois de proposer un agencement compact de l'outil de récolte 1, et de permettre un mouvement de rotation distinct - par exemple avec une amplitude angulaire différente - pour chaque lame de récolte 13.

Ainsi, l'outil de récolte 1 selon l'invention permet de couper et récolter plus facilement des légumes cultivés en butte de cuture, tels que par exemple des asperges.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Outil de récolte (1) pour un système de récolte (3) de légumes de culture cultivés dans une butte de culture, l'outil de récolte (1) comportant :
- une portée cylindrique (111) formant un bras (11) comportant, à une extrémité libre inférieure dudit bras (11), une embase (12) formant un cerclage périphérique à une ouverture de récolte (122) ;
- une pluralité de lames de récolte (13) configurées pour s'étendre en travers de l'ouverture de récolte (122), au moins une des lames de récolte (13) - dit lame tranchante (13A) - comportant un bord de coupe destiné à permettre de trancher un des légumes de culture ;
- un dispositif d'articulation des lames de récolte (13) configuré pour déplier les lames de récolte (13) dans n'importe quelle configuration comprise entre une configuration déployée dans laquelle les lames de récolte (13) s'étendent en travers de l'ouverture de récolte (122) et une configuration repliée dans laquelle les lames de récolte (13) sont hors de l'ouverture de récolte (122).

2. Outil de récolte (1) selon la revendication précédente, dans lequel chaque lame de récolte (13) s'étend de manière courbe.

3. Outil de récolte (1) selon l'une quelconque des revendications précédentes, dans lequel le dispositif d'articulation est du type d'une articulation pivot, chaque lame de récolte (13) étant configurée pour pivoter entre la configuration déployée et la configuration repliée.

4. Outil de récolte (1) selon la revendication précédente, dans lequel chaque lame de récolte (13) est liée à un axe de rotation associé à la portée cylindrique (111) formant le bras (11), l'axe de rotation étant entrainé en rotation de sorte à actionner de manière contrôlée un pivotement des lames de récolte (13) en travers de l'ouverture de récolte (122).

5. Outil de récolte (1) selon la revendication 4, dans lequel chaque lame de récolte (13) comporte un talon (132) couplé en rotation à l'axe de rotation.

6. Outil de récolte (1) selon la revendication 4, dans lequel chaque lame de récolte (13) comporte un talon (132) solidaire de l'axe de rotation.

7. Outil de récolte (1) selon l'une quelconque des revendications 5 ou 6, dans lequel le talon (132) forme une bague engagée sur l'axe de rotation, de sorte à être entrainée en rotation avec ledit axe de rotation.

8. Outil de récolte (1) selon l'une quelconque des revendications 5 à 7, dans lequel chaque lame de récolte (13) comporte, à proximité de son talon (132), un ergot (133) configuré pour collaborer avec la portée cylindrique (111) de sorte à former un arrêt en rotation autour de l'axe de rotation.

9. Outil de récolte (1) selon l'une quelconque des revendications précédentes, dans lequel les lames de récolte (13) et le dispositif d'articulation sont configurés pour permettre, dans la configuration déployée, un déploiement des lames de récolte (13) au travers de l'ouverture de récolte (122), de sorte que les lames de récolte (13) soient réparties et distantes les une des autres.

10. Outil de récolte (1) selon l'une quelconque des revendications précédentes, dans lequel, dans la configuration repliée, le dispositif d'articulation est configuré pour disposer les lames de récolte (13) de manière superposée les unes aux autres.

11. Outil de récolte (1) selon l'une quelconque des revendications précédentes, dans lequel l'embase (12) comporte une lumière périphérique (121) configurée pour accueillir les lames de récolte (13) dans leur configuration repliée.

12. Système de récolte (3) de légumes cultivés dans une butte de culture, le système de récolte (3) comportant :
- un outil de récolte (1) selon l'une quelconque des revendications précédentes ;
- un système d'enfoncement (151) de l'outil de récolte (1), le système d'enfoncement (151) étant configuré pour enfoncer l'outil de récolte (1) dans la bute de culture, relativement à un axe vertical pris parallèlement ou sensiblement parallèlement à l'axe du bras (11) de l'outil de récolte (1).

13. Système de récolte (3) selon la revendication précédente, dans lequel le système de récolte (3) comporte :
- un dispositif de translation de l'outil de récolte (1) avec un légume à récolter dans la butte de culture ;
- un dispositif de détection des légumes à récolter dans la butte de culture ;
- une unité de contrôle configurée pour piloter le dispositif de translation de sorte à ce que le légume à récolté détecté par le dispositif de détection soit centré avec l'ouverture de récolte (122) de l'outil de récolte (1).

14. Procédé de récolte (2) d'un légume cultivé dans une butte de culture, le procédé de récolte (2) étant mis en oeuvre par le système de récolte (3) selon la revendication précédente et comportant les étapes suivantes :
- une étape de détection (21) d'un légume prêt à être récolté ;
- une étape de pilotage (22) du dispositif de translation du système de récolte (3) afin d'aligner le légume prêt à être récolté avec l'outil de récolte (1), et notamment de sorte à ce que ledit légume prêt à être récolté soit situé dans l'ouverture de récolte (122) de l'embase (12) du bras (11) de l'outil ;
- une étape de contrôle (23) du système d'enfoncement (151) de sorte à enfoncer l'outil de récolte (1) dans la butte de culture, les lames de récolte (13) de l'outil de récolte (1) étant toutes configurées dans leur configuration repliée afin de permettre au légume prêt à être récolté de s'insérer au travers de l'ouverture de récolte (122) durant la descente de l'outil de récolte (1) ;
- une étape de sectionnement (24) du légume prêt à être récolté, le dispositif d'articulation étant piloté de sorte à ce que les lames de récolte (13) soient configurées dans leur configuration déployée ;
- une étape de remontée (25) du légume prêt à être récolté, le système d'enfoncement (151) étant configuré pour remonter l'outil de récolte (1), le légume prêt à être remonté étant maintenu et emporté vers le haut par les lames de récolte (13) déployées au travers de l'embase (12). 1
